# EUROPÄISCHE PATENTSCHRIFT

(11) **EP 2 346 654 B1**
(45) Veröffentlichungstag und Bekanntmachung des Hinweises auf die Patenterteilung: **21.02.2018**
(21) Anmeldenummer: 09749022.1
(22) Anmeldetag: 09.11.2009
(51) Int. Cl.: B27B 5/29

(54) **ELEKTROWERKZEUG, INSBESONDERE SÄGE**
ELECTRIC TOOL, PARTICULARLY A SAW
OUTIL ÉLECTRIQUE, EN PARTICULIER SCIE

(30) Priorität: 10.11.2008 DE 102008056563
(43) Veröffentlichungstag der Anmeldung: 27.07.2011
(73) Patentinhaber: Weusthof, Gerhard, 48480 Schapen (DE)
(72) Erfinder: Weusthof, Gerhard, 48480 Schapen (DE)
(74) Vertreter: Hübsch, Dirk
(86) Internationale Anmeldenummer: PCT/EP2009/007984
(87) Internationale Veröffentlichungsnummer: WO 2010/052015

(56) Entgegenhaltungen:
- EP-A1- 1 541 305
- EP-A2- 1 702 724
- WO-A1-2007/121534
- US-B2- 6 769 338

## Beschreibung

**Die Erfindung betrifft ein Elektrowerkzeug, insbesondere eine Säge,** gemäß dem Oberbegriff des Anspruchs 1, mit einem Verbindungsbereich und mit einem Betätigungsgriff, wobei der Betätigungsgriff an dem Verbindungsbereich schwenkbar angeordnet ist, wobei der Betätigungsgriff in mehrere Schwenklagen schwenkbar ist und der Betätigungsgriff mindestens einen Betätigungsschalter zur elektrischen Betätigung des Elektrowerkzeugs aufweist.
Die Erfindung ist zwar nicht auf Sägen beschränkt, jedoch ist die Verwendung der Erfindung bei einer Kappsäge besonders vorteilhaft. Insbesondere betrifft die Erfindung aber eine Kapp- und Gehrungssäge. Das Elektrowerkzeug weist vzw. einen Werkstückauflagetisch und eine bewegbare Einheit, vzw. einen bewegbaren Arm mit einem Bearbeitungswerkzeug auf. Das Bearbeitungswerkzeug kann bspw. eine Säge-, Schleif- oder auch eine Bohrvorrichtung sein. Aber auch handgeführte Elektrowerkzeuge oder Maschinen sind denkbar.
Mit einer Gehrungssäge lassen sich Werkstücke, insbesondere Werkstückstangen, in einem vom rechten Winkel abweichenden Winkel - dem Gehrungswinkel - zuschneiden. Das Werkstück wird dabei auf einem Werkstückauflagetisch der Gehrungssäge gelegt. An einem Arm ist oberhalb des Werkstückauflagetisches eine Sägevorrichtung (als Bearbeitungswerkzeug) zum Sägen des Werkstückes angeordnet. Die Sägevorrichtung weist einen Elektromotor und ein rotierbar angeordnetes, durch den Elektromotor antreibbares Sägeblatt auf. Der Arm ist vzw. funktional wirksam an einem Drehmittel um eine Hochachse drehbar gelagert. Durch das Drehen des Arms ist der Drehwinkel einstellbar. Ferner ist vzw. der Arm um eine Gehrungsachse schwenkbar, wobei sich die Gehrungsachse im wesentlichen senkrecht zur Hochachse, nämlich in einer Schnittebene erstreckt. Zwischen dem Arm und dem Drehmittel kann dazu ein feststellbares Schwenkgelenk vorgesehen sein.
An dem Elektrowerkzeug, insbesondere der Säge, ist ein Verbindungsbereich vorgesehen, an dem ein Betätigungsgriff schwenkbar angeordnet ist. Der Verbindungsbereich ist vzw. an dem Arm der Säge, insbesondere am Gehrungsarm der Gehrungssäge oder im Bereich der am Arm vzw. angelenkten Sägeeinheit/Sägevorrichtung ausgebildet. Dies bedeutet, dass am Gehrungsarm oder an der Sägeeinheit vzw. der Betätigungsgriff um eine Griffschwenkachse schwenkbar angeordnet. Der Betätigungsgriff ist dabei in mehrere Schwenklagen (Schwenkpositionen) schwenkbar.

Der Betätigungsgriff weist ferner mindestens einen Betätigungsschalter zur elektrischen Betätigung des Elektrowerkzeugs auf. Durch Betätigen des Betätigungsschalters kann insbesondere eine dem Gehrungsarm zugeordnete Sägevorrichtung aktiviert werden, so dass durch entsprechendes Betätigen des Betätigungsschalters ein Elektromotor der Sägevorrichtung mit Strom versorgt wird und mit dem Elektromotor ein Sägeblatt angetrieben wird. Der Gehrungsarm kann vzw. teilweise mit Hilfe des Betätigungsgriffes abgesenkt werden, wodurch das Sägeblatt dann das auf dem Auflagetisch aufliegende Werkzeug durchschneidet.

Aus der US 6,769,338 B2 ist eine Gehrungssäge mit einem als Gehrungsarm ausgestalteten Verbindungsbereich und einem Betätigungsgriff bekannt. Der Betätigungsgriff ist in mehrere Schwenklagen schwenkbar und weist einen Betätigungsschalter zur elektrischen Betätigung der Gehrungssäge auf. Der Gehrungsarm kann in verschiedene Schwenkstellungen, bspw. um 45° nach links und rechts relativ zur Vertikalen geneigt werden. Der Betätigungsgriff ist an dem Gehrungsarm um eine waagerechte Achse, die sich parallel zur Schnittachse der Gehrungssäge erstreckt, schwenkbar. Die "Griffschwenkachse" des Betätigungsgriffs ist parallel zur Oberseite des Auflagetischs ausgerichtet. Dadurch kann der Betätigungsgriff bei einem seitlich geneigten Gehrungsarm parallel zum Auflagetisch ausgerichtet bzw. geschwenkt werden. Ferner ist es möglich den Betätigungsgriff so zu schwenken, so dass der Betätigungsgriff nicht quer, sondern parallel zur Ausrichtung des Sägeblatts angeordnet ist. In dieser Ausrichtung kann der Betätigungsgriff nicht von oben oder unten, sondern nur seitlich gefasst werden.

Aus der US 6,658,976 B2 ist eine Gehrungssäge mit einem Werkstückauflagetisch, einem Betätigungsgriff und einer sich parallel zur Ebene des Werkstückauflagetisches erstreckenden "Griffschwenkachse" bekannt. Dieser Betätigungsgriff lässt sich wiederum in eine aufragende Schwenkstellung, d.h. im wesentlichen parallel zum Sägeblatt und in eine Schwenkstellung senkrecht zum Sägeblatt der Gehrungssäge schwenken. In der Schwenkstellung parallel zum Sägeblatt kann der Betätigungsgriff nicht von oben oder unten, sondern ebenfalls nur seitlich durch den Benutzer gefasst werden.

Die im Stand der Technik bekannten Elektrowerkzeuge, insbesondere die bekannten Kapp- und Gehrungssägen sind noch nicht optimal ausgebildet. Bei den bekannten Gehrungssägen lässt sich die Schwenklage des Betätigungsgriffs nicht hinreichend flexibel einstellen, so dass sowohl Linkshänder als auch Rechtshänder den Betätigungsgriff gleichermaßen komfortabel greifen könnten. Durch eine unkomfortable Handstellung beim Sägen ist es sogar möglich, dass dadurch der Sägeschnitt misslingt oder nicht mit der nötigen Präzision ausgeführt wird. Insbesondere kann bei länger andauernden Sägearbeiten die Hand des Benutzers in einer unkomfortablen Position auch eher ermüden und verkrampfen.

Der Erfindung liegt daher die Aufgabe zugrunde, das zuvor genannte Elektrowerkzeug derart auszugestalten und weiterzubilden, so dass eine unkomfortable Handstellung beim Betätigen des Betätigungsgriffs vermieden ist, insbesondere der Komfort für einen Benutzer erhöht ist.

Die zuvor aufgezeigte Aufgabe wird nun durch die Kombination von Merkmalen des Anspruchs 1 gelöst. Die Griffsschwenkachse erstreckt sich vzw. parallel zu der Ebene, in der das Sägeblatt der Gehrungssäge absenkbar ist oder liegt genau in dieser Sägeblatt-Ebene, insbesondere wenn der Betätigungsgriff oberhalb der Sägevorrichtung angeordnet ist. Der Betätigungsgriff ist vzw. rahmenartig ausgebildet und quer, insbesondere im wesentlichen senkrecht zur Sägeebene angeordnet. Somit erstreckt sich der Betätigungsgriff im wesentlichen waagerecht (bei heruntergeklappter Sägeeinheit) in allen seinen Schwenklagen immer im wesentlichen in der gleichen Ebene. Vzw. ist der Betätigungsgriff in mindestens drei betätigbare Schwenklagen schwenkbar. In einer Schwenklage kann der Betätigungsgriff relativ zum Arm (Gehrungsarm) nach rechts gerichtet sein. In einer anderen Schwenklage kann der Betätigungsgriff relativ zum Arm mittig orientiert sein. In einer weiteren Schwenklage kann der Betätigungsgriff relativ zum Arm nach links gerichtet sein. In der mittigen Schwenklage ist der Betätigungsgriff - wenn dieser bei einer Säge vzw. oberhalb des Sägeblatts der Kapp- und Gehrungssäge angeordnet ist - in dieser mittigen Schwenklage vzw. für Rechtshänder sowie für Linkshänder geeignet. Wenn bei einer Kapp- und Gehrungssäge (als Elektrowerkzeug) das Sägeblatt in der herunter geschwungenen Stellung angeordnet ist, dann ist die Griffschwenkachse des Betätigungsgriffes vzw. im wesentlichen vertikal zur Oberseite/Ebene des Werkstückauflagetisches ausgerichtet. Die Griffschwenkachse erstreckt sich dann aufragend, parallel zum Sägeblatt oder liegt, wenn der Betätigungsgriff direkt zentriert oberhalb der Sägceinheit angeordnet ist, direkt in der Ebene des Sägeblattes mit vertikaler Ausrichtung zur Oberseite des Werkstückauflagetisches.

Es gibt nun eine Vielzahl von Möglichkeiten, das erfindungsgemäße Elektrowerkzeug in vorteilhafter Art und Weise auszugestalten und weiterzubilden. Hierfür darf zunächst auf die dem Patentanspruch 1 nachgeordneten Patentansprüche verwiesen werden. Im folgenden wird nun eine bevorzugte Ausgestaltung der Erfindung anhand der Zeichnung und der dazugehörigen Beschreibung näher erläutert. In der Zeichnung zeigt:
- Fig. 1: in einer schematischen, perspektivischen Darstellung ein Elektrowerkzeug, nämlich eine Kapp- und Gehrungssäge von schräg oben hinten rechts mit einem Betätigungsgriff in einer ersten Schwenklage,
- Fig. 2: in einer schematischen, perspektivischen Darstellung die Kapp- und Gehrungssäge aus Fig. 1 mit dem Betätigungsgriff in einer weiteren zweiten Schwenklage,
- Fig. 3: in einer schematischen, perspektivischen Darstellung die Kapp- und Gehrungssäge mit dem Betätigungsgriff in einer dritten Schwenklage,
- Fig. 4: in einer schematischen, perspektivischen Detaildarstellung den Betätigungsgriff und einen Verbindungsbereich der Kapp- und Gehrungssäge aus den Fig. 1 bis 3,
- Fig. 5: in einer schematischen Draufsicht den Betätigungsgriff und den Verbindungsbereich in einer weiteren Schwenklage,
- Fig. 6: in einer schematischen Explosionsdarstellung den Betätigungsgriff und den Verbindungsbereich,
- Fig. 7a: in einer schematischen, perspektivischen Detaildarstellung den Betätigungsgriff und den Verbindungsbereich, wobei ein Gehäuseteil des Verbindungsbereichs entfernt wurde,
- Fig. 7b: in einer schematischen Seitenansicht den Verbindungsbereich und den Betätigungsgriff in einer bestimmten Schwenklage,
- Fig. 8: in einer schematischen Draufsicht den Betätigungsgriff und den Verbindungsbereich,
- Fig. 9: in einer schematischen Schnittansicht entlang der Linie G-G aus Fig. 8 den Betätigungsgriff und den Verbindungsbereich,
- Fig. 10: in einer schematischen Schnittansicht entlang der Linie B-B aus Fig. 7b den Betätigungsgriff und den Verbindungsbereich (von unten) aber in einer anderen Schwenklage, wobei ein Gehäuseteil des Verbindungsbereiches entfernt wurde und ein Betätigungsschalter betätigt ist,
- Fig. 11: in einer schematischen, perspektivischen Darstellung den Betätigungsgriff und den Verbindungsbereich in einer Schwenkstellung wie in Fig. 10, wobei mehrere Gehäuseteile des Betätigungsgriff und des Verbindungsbereichs entfernt sind und ein Betätigungsschalter betätigt ist,
- Fig. 12: in einer schematischen, perspektivischen Darstellung den Betätigungsgriff und den Verbindungsbereich in einer ähnlichen Darstellung wie Fig. 11, wobei der Betätigungsschalter hier nicht betätigt ist,
- Fig. 13: in einer schematischen Schnittansicht entlang der Linie B-B aus Fig. 7b den Betätigungsgriff und den Verbindungsbereich ähnlich wie in Fig. 10, aber mit nicht betätigtem (unbetätigten) Betätigungsschalter,
- Fig. 14: in einer schematischen Schnittansicht den Betätigungsgriff und den Verbindungsbereich ähnlich wie in Fig. 10 und 13, wobei ein Betätigungsschalter nicht betätigt ist und der Betätigungsgriff in einer mittigen Schwenklage angeordnet ist,
- Fig. 15: in einer schematischen, perspektivischen Darstellung den Betätigungsgriff und den Verbindungsbereich in der mittigen Schwenklage,
- Fig. 16: in einer schematischen Schnittansicht entlang der Linie B-B der Fig. 7b den Betätigungsgriff und den Verbindungsbereich in der mittigen Schwenklage, wobei der Betätigungsschalter betätigt ist,
- Fig. 17: in einer schematischen, perspektivischen Darstellung den Betätigungsgriff und den Verbindungsbereich der mittigen Schwenklage aus Fig. 16,
- Fig. 18: in einer schematischen, perspektivischen Darstellung den Betätigungsgriff und den Verbindungsbereich in einer Schwenkstellung nach rechts mit einem nicht betätigten Betätigungsschalter,
- Fig. 19: in einer schematischen Schnittansicht entlang der Schnittlinie A-A aus Fig. 7b von oben den Betätigungsgriff und den Verbindungsbereich, in der in Fig. 18 dargestellten Schwenk- und Betätigungslage,
- Fig. 20: in einer schematischen, perspektivischen Darstellung den Betätigungsgriff und den Verbindungsbereich in der in Fig. 18 dargestellten Schwenklage, wobei der Betätigungsschalter betätigt ist,
- Fig. 21: in einer schematischen Schnittansicht entlang der Linie AA der Fig. 7b den Betätigungsgriff und den Verbindungsbereich ähnlich wie in Fig. 19, wobei der Betätigungsschalter betätigt ist,
- Fig. 22: in einer schematischen, perspektivischen Darstellung den Betätigungsgriff und den Verbindungsbereich in einer mittigen Schwenklage, wobei der Betätigungsschalter nicht betätigt ist,
- Fig. 23: in einer schematischen Schnittansicht entlang der Linie A-A der Fig. 7b den Betätigungsgriff und den Verbindungsbereich in einer der Fig. 22 entsprechenden Schwenklage,
- Fig. 24: in einer schematischen, perspektivischen Darstellung den Betätigungsgriff und den Verbindungsbereich in einer mittigen Schwenklage, wobei hier der entsprechende Betätigungsschalter betätigt ist, und
- Fig. 25: in einer schematischen Schnittansicht entlang der Linie A-A der Fig. 7b den Betätigungsgriff in der in Fig. 24 dargestellten mittigen Schwenklage, wobei der entsprechende Betätigungsschalter betätigt ist.

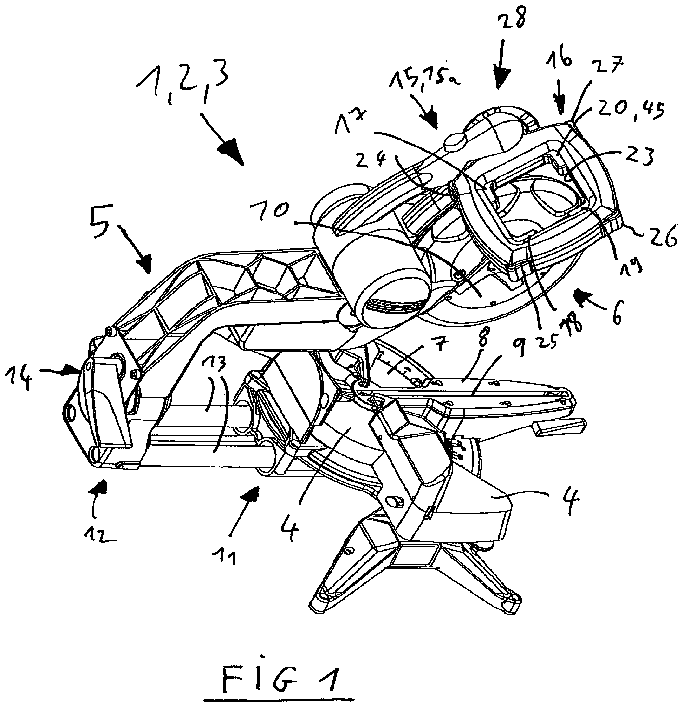

In den Fig. 1, 2 und 3 ist ein Elektrowerkzeug 1 gut zu erkennen.

Das Elektrowerkzeug 1 ist hier als Säge 2, insbesondere als Kapp- und Gehrungssäge 3 ausgebildet.

Das Elektrowerkzeug 1 weist vzw. einen Werkstückauflagetisch 4 auf. Auf den Werkstückauflagetisch 4 kann ein nicht dargestelltes Werkstück zur Bearbeitung aufgelegt werden. Das Elektrowerkzeug 1 weist vzw. einen Arm 5 auf. An dem Arm 5 ist insbesondere eine Werkstückbearbeitungsvorrichtung - hier insbesondere eine Sägevorrichtung 6 - vzw. zusätzlich nochmals schwenkbar angeordnet. Die Werkstückbearbeitungsvorrichtung, vzw. die Sägevorrichtung 6 ist daher vzw. hochschwenkbar und absenkbar angeordnet. Die Sägevorrichtung 6 kann hier um eine nicht näher bezeichnete Querachse relativ zum Arm 5 in Richtung des Werkstückauflagetisches 4 also hoch und runter geschwenkt werden.

In alternativer Ausgestaltung kann das Elektrowerkzeug 1 bspw. als Ständerbohrmaschine (nicht dargestellt) oder als handgeführte Maschine ausgebildet sein. Allgemein betrifft die Erfindung ein 1-hand-betätigbares Elektrowerkzeug 1. Der Arm 5 kann hier mit einer Hand betätigt, insbesondere nach hinten geschoben und nach vorne gezogen werden, wobei die Sägevorrichtung 6 vzw. einhändig auch nach oben und unten verschwenkt werden kann.

Im folgenden darf die Kapp- und Gehrungssäge 3 als bevorzugte Ausführungsform des Elektrowerkzeuges 1 näher erläutert werden:
Mit der Kapp- und Gehrungssäge 3 können insbesondere Leisten, Paneele oder Platten auf die gewünschte Länge, vzw. einschließlich der gewünschten Gehrungsschnitte geschnitten werden. Mit der Kapp- und Gehrungssäge 3 können nicht nur Schnitte rechtwinklig zur Längsachse des nicht dargestellten Werkstückes durchgeführt werden, sondern auch Gehrungsschnitte in einem spitzen Winkel zur Längsachse des Werkstückes.

Auf dem Werkstückauflagetisch 4 können die Werkstücke insbesondere quer angeordnet werden, d.h. die Werkstücke erstrecken sich mit Ihrer Längsachse vzw. quer auf dem Werkstückauflagetisch 4. Unterhalb des Werkstückauflagetisches 4 erstreckt sich ein drehbar gelagerter Drehteller 7, der einstückig mit einem Ausleger 8 verbunden ist. Der Ausleger 8 weist dabei einen Sägeschlitz 9 auf, in die die Sägevorrichtung 6 mit dem durch die Sägeblattabdeckung 10 verdeckten Kreissägeblatt eintauchen kann. Wenn die Sägevorrichtung 6 abgesenkt wird, klappt dann vzw. die Sägeblattabdeckung 10 zurück und gibt das Kreissägeblatt frei (nicht dargestellt).

Mit dem Drehteller 7 ist der Arm 5 über eine Gleitführungsvorrichtung 11 und eine Schwenkgelenkverbindung 12 funktional wirksam verbunden. Die Gleitführungsvorrichtung 11 weist vzw. zwei parallel zueinander angeordnete Führungsstangen 13 auf. Der Arm 5 kann vzw. zum einen mit dem Drehteller 7 um eine nicht eingezeichnete Hochachse relativ zum Auflagetisch 4 gedreht werden und zum anderen mit der Gleitführungsvorrichtung 11 translatorisch in Längsrichtung der Führungsstangen 13 verschoben werden und um die hier parallel zu den Führungsstangen 13 angeordnete Schwenkachse 14 geschwenkt werden. Durch die Schwenkbeweglichkeit des Arms 5 um die Schwenkachse 14 und die Hochachse können mit der Kapp- und Gehrungssäge 3 sogenannte "Doppelgehrungsschnitte" ausgeführt werden.

Das Elektrowerkzeug 1 weist ferner einen Verbindungsbereich 15 und einen Betätigungsgriff 16 auf. Der Betätigungsgriff 16 ist an dem Verbindungsbereich 15 schwenkbar angeordnet. Der Betätigungsgriff 16 ist dabei in mehrere Schwenklagen schwenkbar.

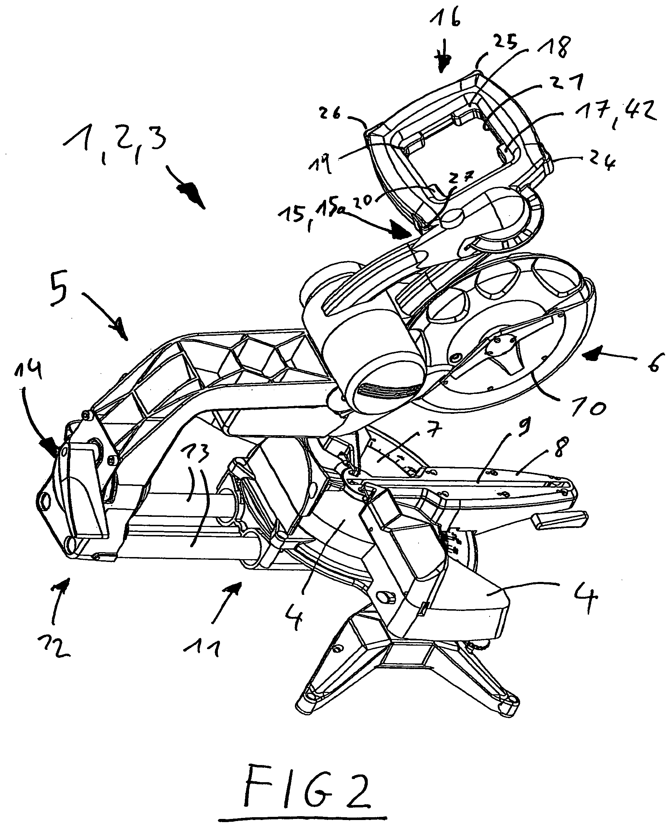

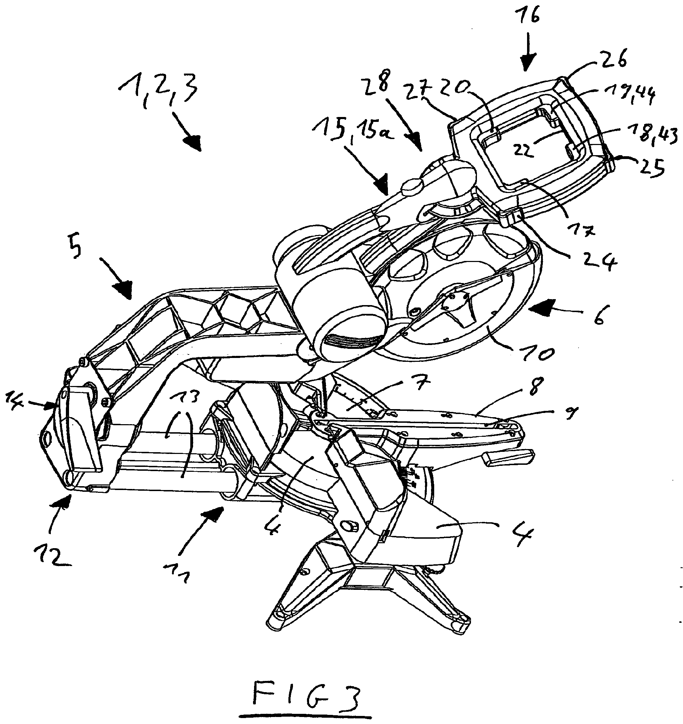

In den Fig. 1, 2 und 3 sind drei verschiedene Schwenklagen dargestellt. In Fig. 1 ist eine erste Schwenklage des Betätigungsgriffs 16 relativ zum Verbindungsbereich 15 dargestellt, wobei der Betätigungsgriff 16 hier nach links aus der Sicht des Benutzers der Kapp- und Gehrungssäge 3 geschwenkt ist. In Fig. 2 ist der Betätigungsgriff 16 relativ zum Verbindungsbereich 15 nach rechts geschwenkt aus der Sicht des Benutzers. In Fig. 3 ist der Betätigungsgriff mittig zum Verbindungsbereich 15 ausgerichtet.

Die in Fig. 1 dargestellte Schwenklage "links" eignet sich besonders zur Betätigung des Elektrowerkzeuges 1 mit der linken Hand, mit der rechten Hand könnte dann das Werkstück festgehalten werden. Die in Fig. 2 dargestellte Schwenklage "rechts" 16 eignet sich für eine Betätigung des Arms 5 bzw. der Sägevorrichtung 6 mit der rechten Hand, mit der linken Hand könnte dann das Werkstück festgehalten werden. Die mittige, in Fig. 3 dargestellte Schwenklage eignet sich insbesondere für eine linkshändige oder rechtshändige Betätigung des Elektrowerkzeugs 1, insbesondere eine "Krafteinleitung" durch den Benutzer ist dann auch mittig realisiert, insbesondere daher für sehr saubere Schnitte geeignet.

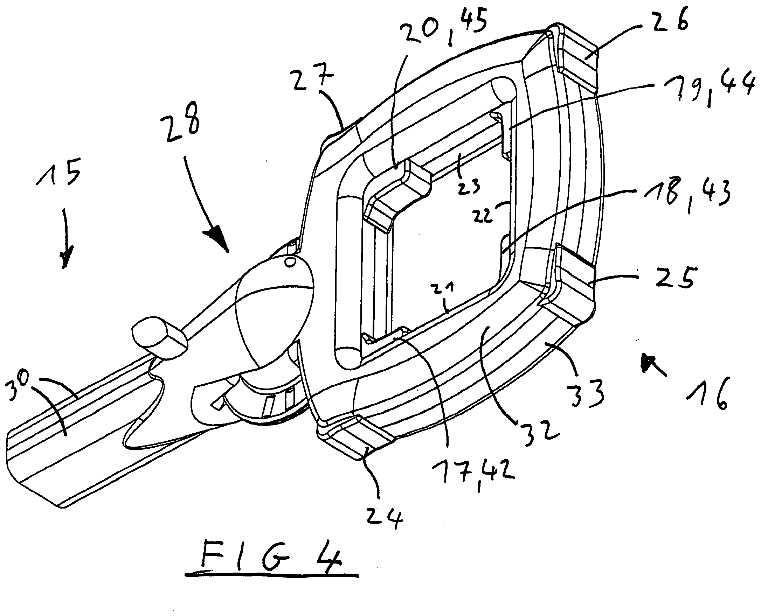

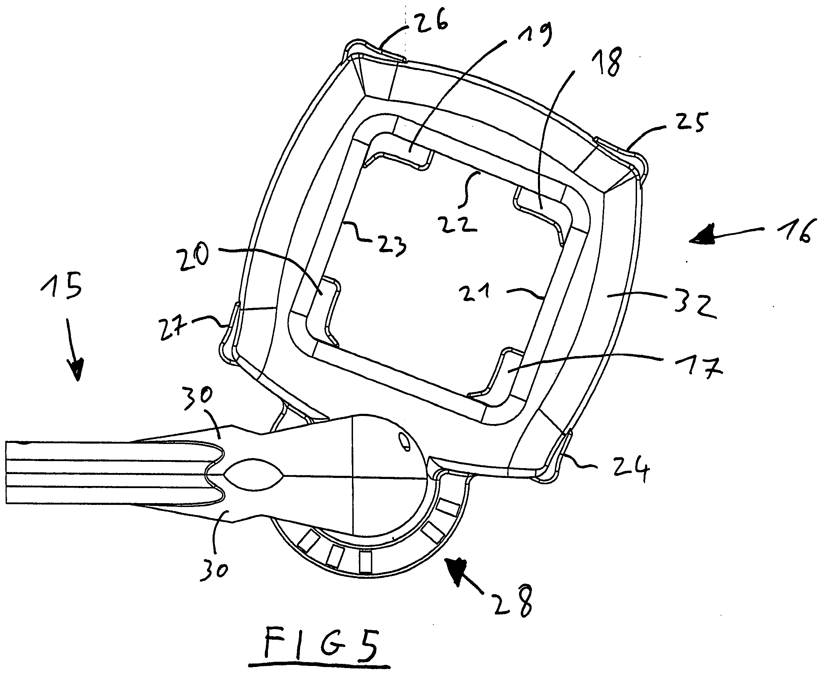

Der Betätigungsgriff 16 weist mehrere Betätigungsschalter auf. In dem hier dargestellten Ausführungsbeispiel des Elektrowerkzeugs 1 sind vzw. vier Betätigungsschalter 17, 18, 19 und 20 vorgesehen. Der Verbindungsbereich 15 ist vzw. mittig, in der Ebene der Sägevorrichtung 6 angeordnet. Alternativ könnte der Verbindungsbereich 15 seitlich versetzt zur Sägevorrichtung 6 bzw. versetzt zur Sägeblatt-Ebene angeordnet sein. Der Verbindungsbereich 15 erstreckt sich hier vzw. im wesentlichen in der Ebene des Sägeblattes. Der Verbindungsbereich 15 wird hier von einem Ausleger 15a gebildet. Der Ausleger 15a erstreckt sich oberhalb des Sägeblattes, vzw. im wesentlichen in der Sägeebene. Der Ausleger 15a ist starr mit der Sägevorrichtung 6 verbunden.
Im folgenden wird nun auf die Fig. 4 und 5 Bezug genommen:
Gut zu erkennen ist, dass der Betätigungsgriff 16 hier im wesentlichen rahmenartig ausgebildet ist und vzw. eine Rechteckform aufweist. Aber auch andere Formen, vzw. rahmenartige oder teil-rahmenartige Formen, sind denkbar. Der Betätigungsgriff 16 weist ein schalenartiges Gehäuse auf. Die Betätigungsschalter 17, 18, 19 und 20 sind jeweils so angeordnet, dass diese vzw. mit dem Zeigefinger und/oder dem Mittelfinger betätigbar sind. Dazu sind die Betätigungsschalter 17, 18, 19, 20 vzw. an drei Innenseiten 21, 22, 23 des Betätigungsgriffs 16 angeordnet. Den seitlichen Innenseiten 21 und 23 ist dabei jeweils nur einer der Betätigungsschalter - hier der Betätigungsschalter 17 bzw. 20 - und der mittleren Innenseite 22 sind vzw. zwei Betätigungsschalter 18 und 19 zugeordnet. Die Betätigungsschalter 17, 18, 19 und 20 sind hierbei im wesentlichen als eine Art Eben- bzw. Profilelemente von bestimmter Struktur ausgebildet und innerhalb des schalenartigen Gehäuses des Betätigungsgriffes 16 entsprechend angeordnet, was noch erläutert werden wird.
Jedem der Betätigungsschalter 17, 18, 19, 20 ist vzw. ein Sicherungstaster 24, 25, 26, 27 zugeordnet. Die Sicherungstaster 24, 25, 26, 27 blockieren dabei jeweils mechanisch eine Bewegung der Betätigungsschalter 17, 18, 19, 20, solange die Sicherheitstaster 24, 25, 26, 27 nicht betätigt sind. Der Verbindungsbereich 15 und der Betätigungsgriff 16 sind mittels einer Gelenkverbindung 28 miteinander verbunden und die Gelenkverbindung weist ein Lagerauge 28a und eine mit dem Lagerauge 28a in Eingriff stehende Griffschwenkachse 29 auf. Dies hat den Vorteil, dass der Betätigungsgriff 16 in einer Ebene vzw. quer, insbesondere im wesentlichen rechtwinklig zur Sägeebene schwenkbar ist. Durch die Gelenkverbindung 28 kann der Betätigungsgriff 16 in allen Schwenklagen mit pronierter Handstellung, d.h. Handrücken nach oben und Handinnenseite nach unten, gegriffen werden. Bei der hier gezeigten bevorzugten Ausführungsform weist der Betätigungsgriff 16 das Lagerauge 28a auf, wobei das Lagerauge 28a bei der hier bevorzugten Ausführungsform die Griffschwenkachse 29 (die auch als bolzenartiges Griffschwenkachsen-Element bezeichnenbar ist) vzw. vollständig umgreift. Von Bedeutung ist hier die Kombination der Griffschwenkachse 29 (bzw. des Griffschwenkachsen-Elementes) mit einem funktionstechnisch ausgebildeten Lagerauge, um das Eingreifen der Griffschwenkachse 29 (bzw. des Griffschwenkachsen-Elementes) in den entsprechenden Bereich des Lagerauges zu realisieren, damit vzw. der Betätigungsgriff 16 zwar in unterschiedliche Schwenklagen, aber im wesentlichen vzw. in einer gleichen Ebene schwenkbar ist.

Insbesondere ist vorteilhaft, dass sich in der mittigen Schwenklage (vgl. Fig. 3) der Betätigungsgriff 16 ebenfalls im wesentlichen senkrecht zum Sägeblatt bzw. zur Sägeebene erstreckt. Dadurch, dass der Betätigungsgriff 16 in einer Ebene durch die Gelenkverbindung 28 schwenkbar ist, kann der Betätigungsgriff 16 immer von der gleichen Seite - vzw. von oben - gegriffen werden. Dies hat den Vorteil, dass in allen Schwenklagen der Betätigungsgriff 16 komfortabel zu greifen ist, wodurch eine präzise und entspannte Führung des Arms 5 mit der Sägevorrichtung 6 beim Sägen möglich ist.

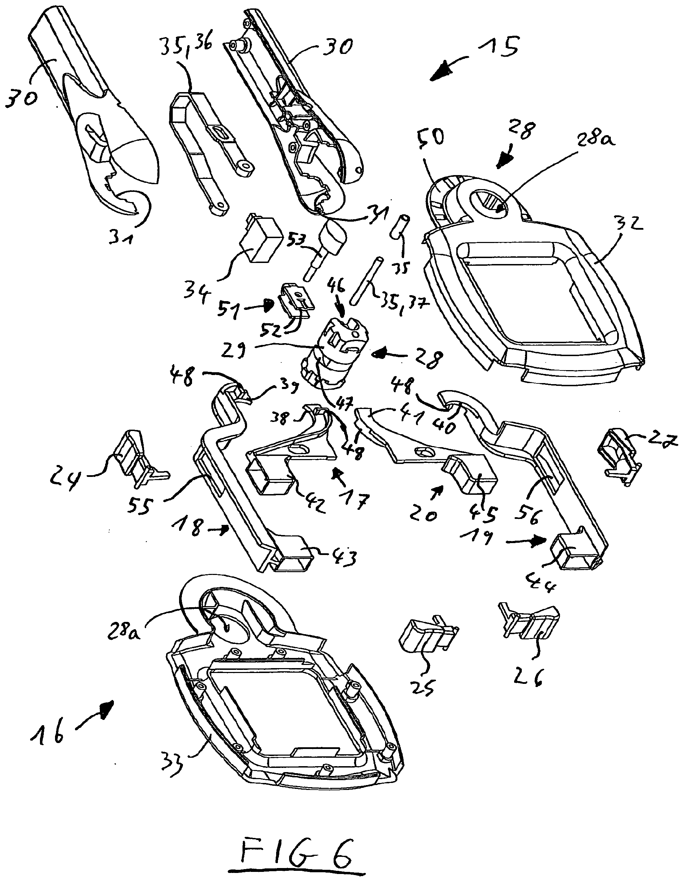

Im folgenden wird auf die Fig. 6, 7a, 7b, 8 und 9 Bezug genommen. Die Gelenkverbindung 28 weist eine vzw. dem Verbindungsbereich 15 zugeordnete Griffschwenkachse 29 (wobei das hier in den Figuren mit dem Bezugszeichen "29" bezeichnete Element auch als Griffschwenkachsen-Element bezeichnenbar ist) auf. Der Betätigungsgriff 16 ist an der Griffschwenkachse 29 schwenkbar gelagert und weist hierzu vzw. das Lagerauge 28a auf. Die Griffschwenkachse 29 erstreckt sich vzw. quer zum Betätigungsgriff 16, d.h. quer zur Längserstreckung der Innenseiten 21, 22 und 23 des Betätigungsgriffs 16. Die Griffschwenkachse 29 erstreckt sich vzw. quer zum Werkstückauflagetisch 4. Bei der Kapp- und Gehrungssäge ist, insbesondere im heruntergeschwenkten Zustand der Sägevorrichtung 6 daher vzw. die Griffschwenkachse 29 vertikal zur Ebene des Werkstückauflagetisches 4 angeordnet bzw. vorgesehen.

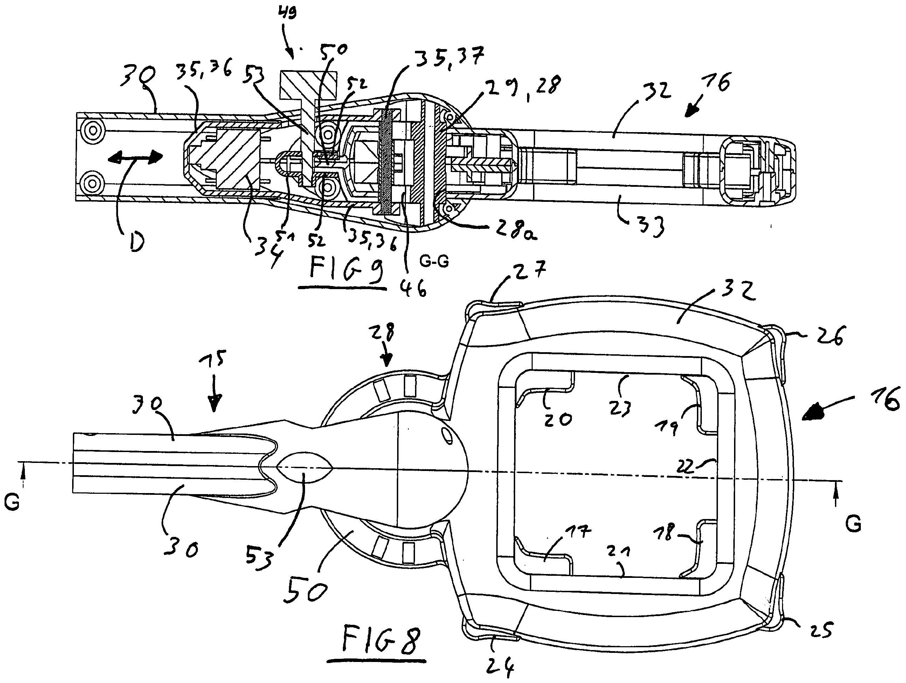

Der Verbindungsbereich 15 weist vzw. mehrere Schalenteile auf. Der Verbindungsbereich 15 weist hier zwei Schalenteile 30 auf, die vzw. im wesentlichen baugleich ausgebildet sind. Der Verbindungsbereich 15 weist vzw. eine Aufnahme 31 auf, in die die Griffschwenkachse 29 insbesondere formschlüssig, drehfest eingesetzt ist. Durch die drehfeste Verbindung ist die Griffschwenkachse 29 dem Verbindungsbereich 15 und nicht dem drehbaren Betätigungsgriff 16 zugeordnet. Die Aufnahme 31 wird hier von den beiden Schalenteilen 30 begrenzt.
Der Betätigungsgriff 16 weist vzw. mehrere Griffschalenteile, hier die Griffschalenteile 32 und 33 auf, durch die im wesentlichen das Gehäuse des Betätigungsgriffes 16 gebildet wird. Die Griffschalenteile 32 und 33 sind vzw. durch mehrere nicht näher bezeichnete Schraub-, Steck- und/oder Klemmverbindungen miteinander verbundenen. Ebenso sind vzw. die beiden Schalenteile 30 des Verbindungsbereichs 15 miteinander verbunden.
Die hier dargestellte Ausführungsform des Betätigungsgriffes 16 weist ferner einen Betätigungsmechanismus (in seiner Gesamtheit nicht näher bezeichnet) auf:
Der Verbindungsbereich 15 weist ein elektrisches Kontaktelement 34 auf. Das elektrische Kontaktelement 34 ist zwischen beiden Schalenteilen 30 vzw. außerhalb des Bereichs des Betätigungsgriffes 16 formschlüssig angeordnet. Der Verbindungsbereich 15 weist ferner einen mittels der Betätigungsschalter 17 bis 20 verschiebbares Schaltelement, das vzw. als Schaltbügel 35 ausgeführt ist, auf. Das Kontaktelement 34 ist durch ein Verschieben des Schaltelementes, hier vzw. des Schaltbügels 35 betätigbar.
Der Schaltbügel 35 weist einen vzw. U-förmigen Bügel 36 und ein Verbindungselement 37 auf. Der Bügel 36 ist durch das Verbindungselement 37 am Ende seiner im wesentlichen parallel zueinander verlaufenden Schenkel (nicht näher bezeichnet) geschlossen. Das Verbindungselement 37 verbindet die Schenkel des Bügels 36 (vgl. Fig. 9).

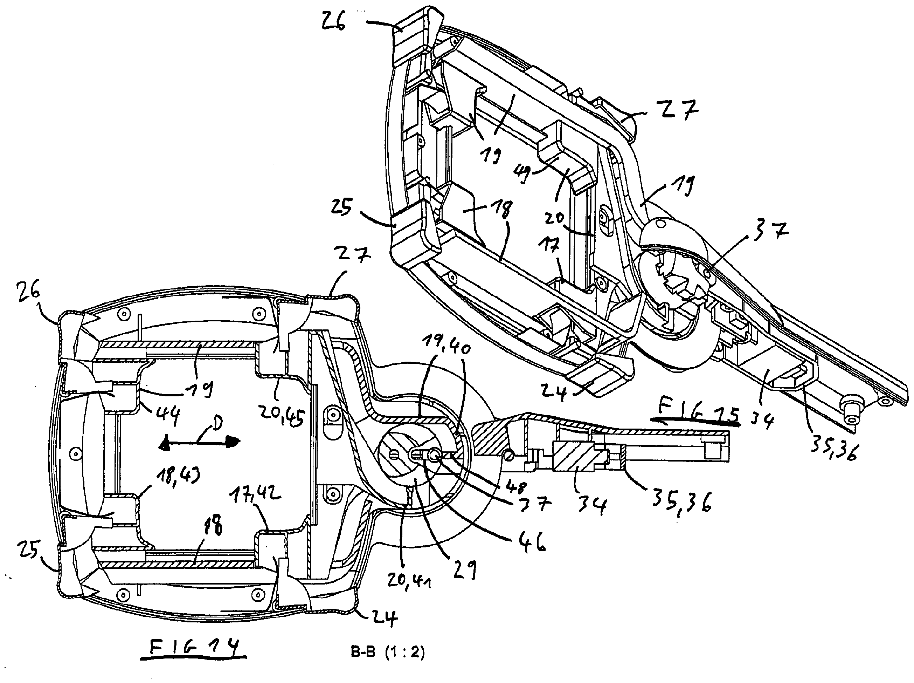

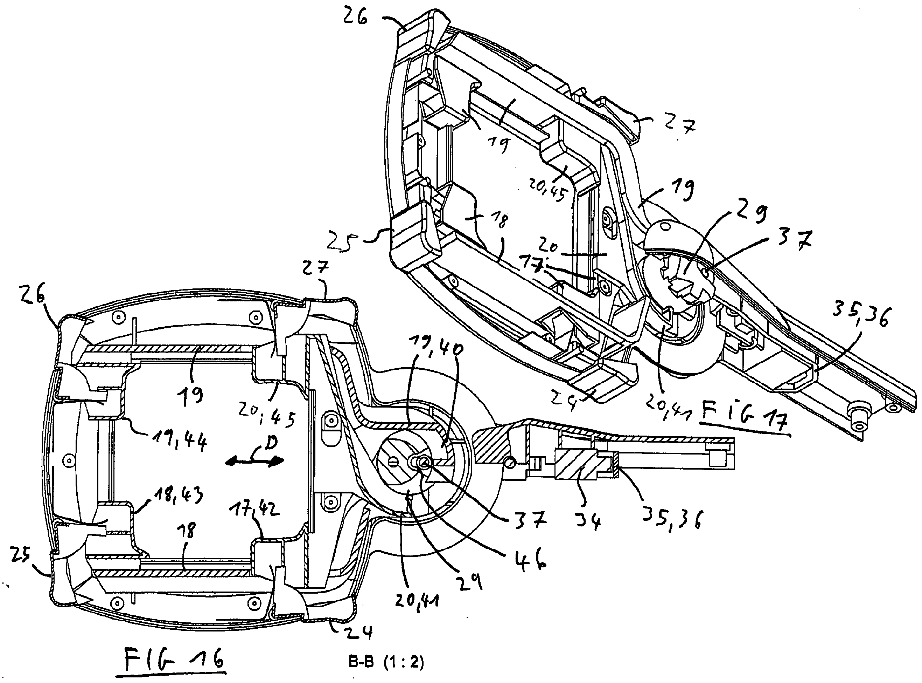

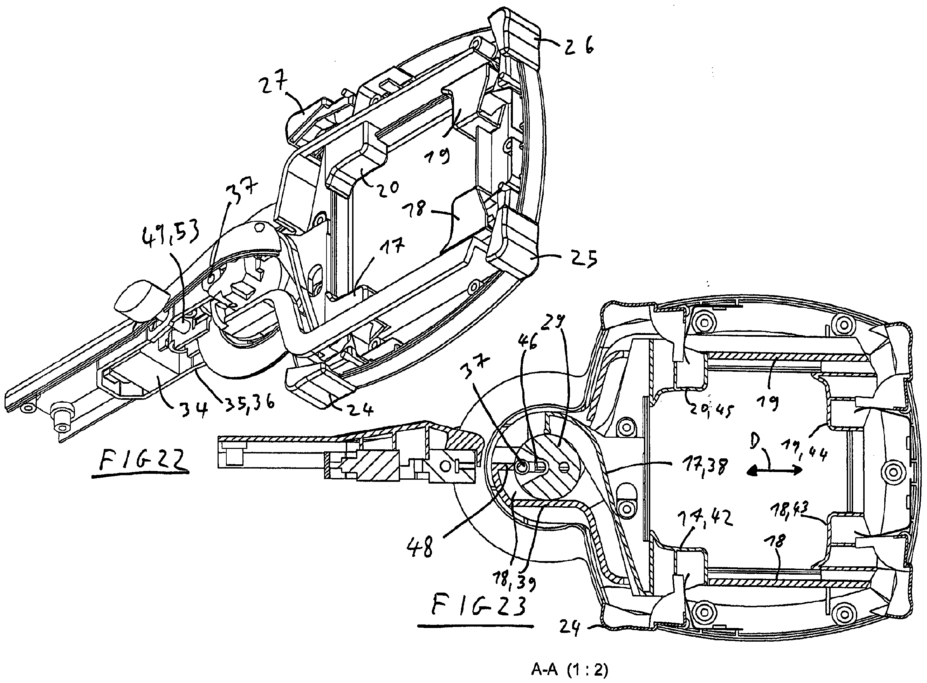

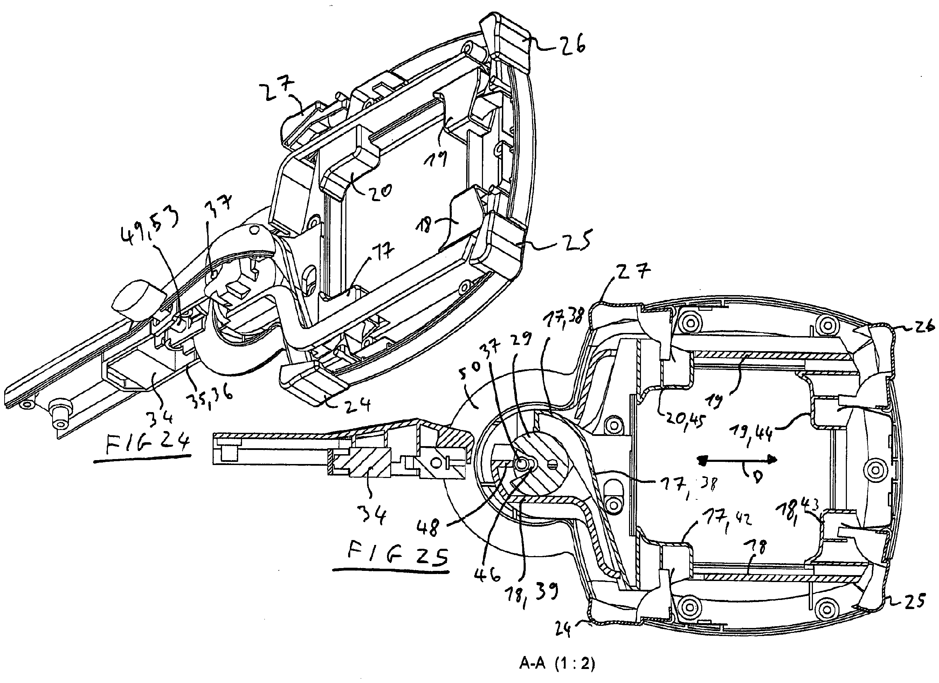

Das elektrische Kontaktelement 34 ist über nicht dargestellte elektrische Leitungen, insbesondere mit dem hier nicht dargestellten Elektromotor des Elektrowerkzeugs 1, insbesondere hier mit dem das Sägeblatt antreibenden Elektromotor verbunden. In bevorzugter Ausgestaltung kann mit dem elektrischen Kontaktelement 34 auch die Sägeblattabdeckung 10 verriegelt und entriegelt werden. Der Schaltbügel 35 ist innerhalb der beiden Schalenteile 30 verschiebbar gelagert. Die Verschiebungsrichtung ist in Fig. 9 durch den Doppelpfeil D angedeutet.
Die Betätigungsschalter 17, 18, 19, 20 weisen vzw. jeweils als integralen Bestandteil einen Schalthaken 38, 39, 40 und 41 auf. In alternativer Ausgestaltung können die Betätigungsschalter 17, 18, 19 und 20 mit jeweils einem entsprechenden Schalthaken 38,39, 40, 41 funktional wirksam verbunden sein. Die Betätigungsschalter 17, 18, 19, 20 weisen ferner - vzw. als integrale Bestandteile - Betätigungstaster 42, 43, 44 und 45 auf (vgl. Fig. 6).
Die Betätigungsschalter 18, 19 sind der mittleren Schwenklage (vgl. Fig. 3) zugeordnet und nur in dieser Schwenklage betätigbar. Der Betätigungsschalter 18 ist dabei in der mittleren Schwenklage insbesondere mit dem Zeigefinger der rechten Hand betätigbar. Der zugehörige Betätigungstaster 43 ist links (von oben betrachtet) an der Innenseite 22 angeordnet. Der Betätigungsschalter 19 ist dabei in der mittleren Schwenklage insbesondere mit dem Zeigefinger der linken Hand betätigbar. Der zugehörige Betätigungstaster 44 ist rechts (von oben betrachtet) an der Innenseite 22 angeordnet.
Der Betätigungsschalter 17 ist der rechten Schwenklage (vgl. Fig. 2) zugeordnet und nur in dieser Schwenklage betätigbar. Der zugehörige Betätigungstaster 42 ist dabei in der rechten Schwenklage insbesondere mit dem Zeigefinger der rechten Hand betätigbar. Der Betätigungstaster 42 ist links an der Innenseite 21 angeordnet. Der Betätigungsschalter 18 erstreckt sich innerhalb der Griffschalenteile 32 und 33 entlang dieser Innenseite 21 und weist ein Fenster 55 (vgl. Fig.6) auf, das der Betätigungstaster 42 durchgreift.
Der Betätigungsschalter 20 ist der linken Schwenklage (vgl. Fig. 1) zugeordnet und nur in dieser Schwenklage betätigbar. Der zugehörige Betätigungstaster 45 ist dabei in der linken Schwenklage insbesondere mit dem Zeigefinger der linken Hand betätigbar. Der Betätigungstaster 45 ist rechts an der Innenseite 23 angeordnet. Der Betätigungsschalter 19 erstreckt sich innerhalb der Griffschalenteile 32 und 33 entlang dieser Innenseite 23 und weist ein Fenster 56 (vgl. Fig.9) auf, das der Betätigungstaster 45 durchgreift.
Die Schalthaken 38, 39, 40, 41 sind durch Betätigen der Betätigungstaster 42, 43, 44, 45 am Betätigungsgriff 16 bzw. vzw. innerhalb der Griffschalenteile 32 und 33 so verschiebbar angeordnet und/oder bewegbar ausgebildet und/oder angelenkt, dass die Schalthaken 38, 39, 40, 41 - im Endeffekt - funktionstechnisch mit dem Schaltelement, vzw. mit dem Schaltbügel 35 zusammenwirken können. Insbesondere können die Schalthaken 38, 39, 40, 41 beim Betätigen der Betätigungstaster 42, 43, 44, 45 in der jeweiligen Schwenklage des Betätigungsgriffs 16 in Richtung des Doppelpfeils D (vgl. Fig. 9 hier nach rechts) bewegt werden, wodurch der entsprechende Schalthaken 38, 39, 40 41 an dem Verbindungselement 37 angreifen und das Verbindungselement 37 ebenfalls zusammen mit dem Bügel 36 in Richtung auf die Mitte der Griffschwenkachse 29 verschieben kann. Hierbei bildet ein Betätigungstaster, ein Betätigungsschalter und ein Schalthaken ein entsprechendes Betätigungselement, das innerhalb des Betätigungsgriffes 16 bewegbar angeordnet ist. Dieses Betätigungselement kann funktionstechnisch einwirken, insbesondere durch die jeweiligen Schalthaken auf ein im Bereich der Griffschwenkachse 29 angeordnetes bewegbares Element, vzw. kann der jeweilige Schalthaken einwirken auf das vzw. im Bereich der Griffschwenkachse 29 angeordnete Verbindungselement 37 (als ein Teil des Schaltbügels 35), das hier in Zusammenwirkung mit den jeweiligen Enden der Betätigungsschalter, hier in Zusammenwirkung mit den Schalthaken in Richtung auf die Mitte der Griffschwenkachse 29 nach innen verschiebbar ist. Hierdurch wird - wie bereits oben erwähnt - dann der Schaltbügel 35 derart verschoben, dass ein Kontaktelement 34 betätigt wird. Das Kontaktelement 34 und/oder zumindest ein Teil des Kontaktelementes 34 ist vzw. intern selbst mit einer Federkraft beaufschlagt, so dass für den Fall, dass der jeweilige Betätigungsschalter 17, 18, 19, 20 bzw. die Betätigungstaster 42, 43, 44, 45 nicht mehr manuell betätigt werden aufgrund der im Kontaktelement 34 angelegten Federkraft eine Rückbewegung, also eine Verschiebung des Verbindungselements 37 in radialer Richtung nach außen von der Mitte der Griffschwenkachse 29 weg erfolgt. Es wird also - im Endeffekt - über ein im Bereich der Griffschwenkachse 29 bewegbar angeordnetes Element das elektronische Kontaktelement 34 ausgelöst.
In jeder der Schwenklagen ist nur ein Teil der Betätigungsschalter 17, 18, 19, 20 in Richtung des Doppelpfeils D verschiebbar angeordnet:
In der mittigen Schwenklage (vgl. Ansicht "von oben" in Fig. 14, 15, 16 und 17 sowie Ansicht "von unten" in Fig. 22, 23, 24 und 25) sind die beiden Betätigungsschalter 18 und 19 in Richtung des Doppelpfeils D verschiebbar. Die den Betätigungsschaltern 18 und 19 zugeordneten Schalthaken 39 (vgl. Fig. 23, 25) und 40 (vgl. Fig. 14 und 16) greifen dabei am Verbindungselement 37 und damit am Schaltbügel 35 zur Betätigung des Kontaktelementes 34 an. Die Griffschwenkachse 29 weist eine Aussparung 46 auf, wobei in die Aussparung 46 der Schaltbügel 35 eingreift. Innerhalb der Aussparung 46 greift der entsprechende Schalthaken 39 bzw. 40 an dem Verbindungselement 37 an. Das Verbindungselement 37 wird durch Verschieben des Schalthakens 38, 39 in der Aussparung 46 verschoben. In den Fig. 14 und 23 ist das Verbindungselement 37 in einer nicht betätigten Stellung und in den Fig. 16 und 25 in einer betätigten Stellung dargestellt. Aufgrund der so konstruierten Möglichkeit der Verschiebung des Verbindungselementes 37 quer zur Griffschwenkachse 29, nämlich vzw. innerhalb der Aussparung 46 kann in jeder Schwenklage des Betätigungsgriffes 16 der Schaltbügel 35 und damit das außerhalb des Bereichs des Betätigungsgriffes 16 vorgesehene elektrische Kontaktelement 34 entsprechend angesteuert, vzw. eingeschaltet werden, wobei die Ausschaltung über die Federelemente innerhalb des Kontaktelementes 34 realisiert wird, wodurch das Verbindungselement 37 dann wieder in die umgekehrte Richtung bewegt wird, wodurch insbesondere wiederum auch dann der jeweilige aktuell wirksam mit dem Verbindungselement 37 zusammenwirkende Betätigungsschalter in seine Ausgangsstellung zurückbewegt wird.
Ein Abschnitt der Aussparung 46 bildet hier vzw. ein sich im wesentlichen in Radialrichtung erstreckendes, randoffenes Langloch. Dieses Langloch bildet eine Führung für den Schaltbügel 35, insbesondere für das Verbindungselement 37. Innerhalb der Aussparung 46 greift der entsprechende Schalthaken 38, 39, 40, 41 an dem Verbindungselement 37 an.

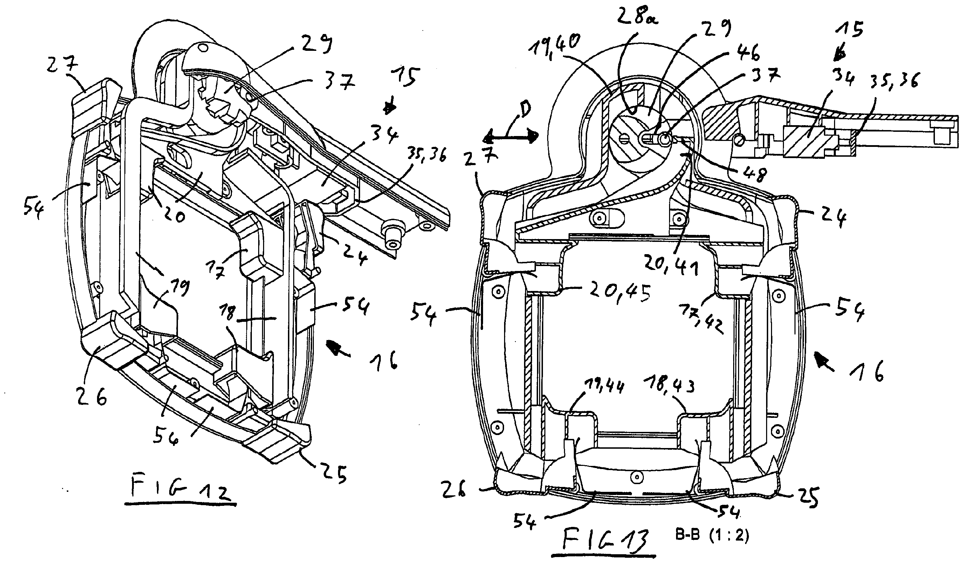

Dadurch wird bei entsprechender Betätigung des jeweiligen Schalthakens das nicht näher bezeichnete Auslöseelement des elektrischen Kontaktelements 34 in das nicht näher bezeichnete Gehäuse des elektrischen Kontaktelements 34 gedrückt und der elektrische Kontakt ausgelöst. Ein weiterer Abschnitt der Aussparung 46 in der Griffschwenkachse 29 ist insbesondere im wesentlichen V-förmig ausgebildet (vgl. Fig. 13, 14, 16, 19, 21, 23 und 25). Die entsprechenden Schalthaken 38, 39, 40 und 41 greifen in den V-förmigen Abschnitt der Aussparung 46 ein.

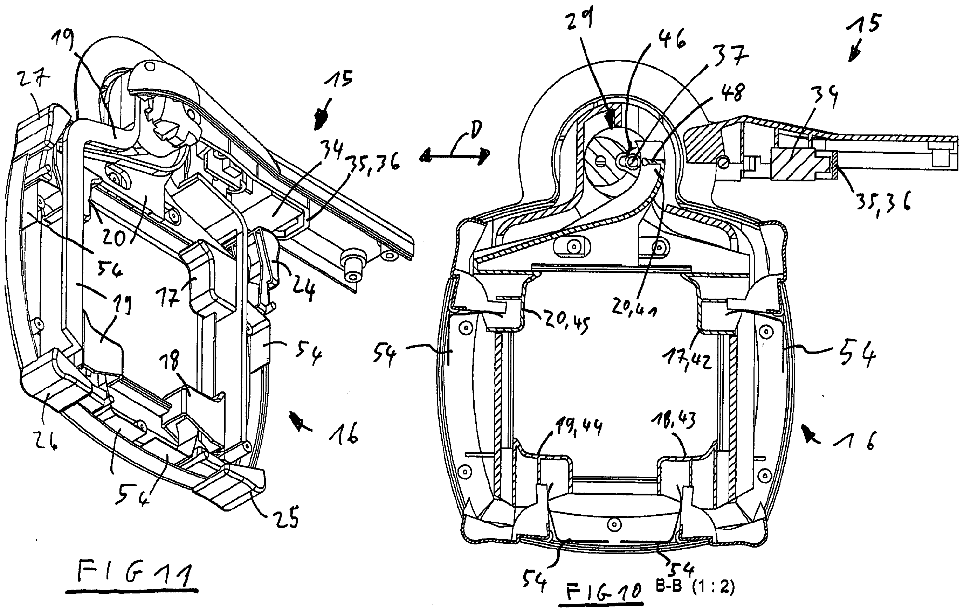

In der linken Schwenklage (vgl. Ansicht "von unten" in Fig. 10, 11, 12 und 13) ist nur der Betätigungsschalter 20 in Richtung des Doppelpfeils D verschiebbar. Der dem Betätigungsschalter 20 zugeordnete Schalthaken 41 (vgl. Fig. 10, 13) greift am Verbindungselement 37 und damit am Schaltbügel 35 zur Betätigung des Kontaktelementes 34 an und greift in den V-förmigen Abschnitt der Aussparung 46 ein. Innerhalb der Aussparung 46 greift der Schalthaken 41 am Verbindungselement 37 an. Das Verbindungselement 37 wird durch Verschieben des Schalthakens 41, d.h. durch Drücken des Betätigungstasters 45, in der Aussparung 46 verschoben. In den Fig. 12 und 13 ist das Verbindungselement 37 in einer nicht betätigten Stellung und in den Fig. 10 und 11 in einer betätigten Stellung dargestellt.

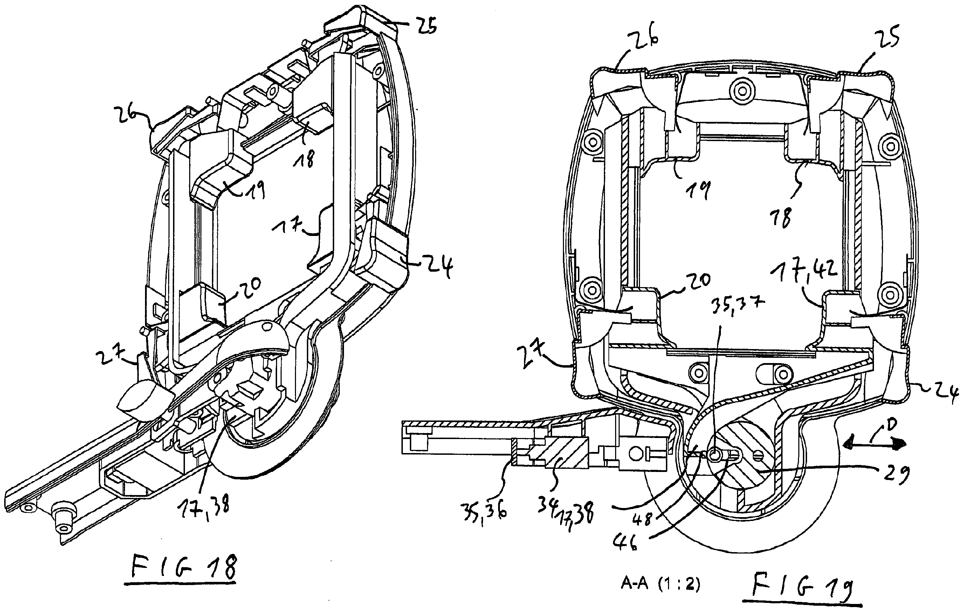

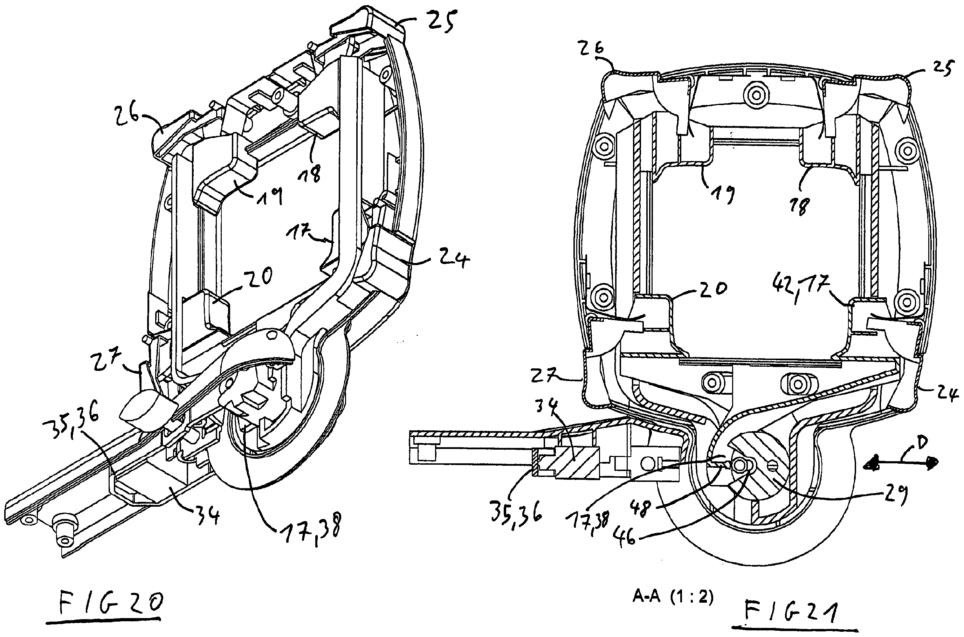

In der rechten Schwenklage (vgl. Ansicht "von oben" in Fig. 18, 19, 20 und 21) ist nur der Betätigungsschalter 17 in Richtung des Doppelpfeils D verschiebbar. Der dem Betätigungsschalter 17 zugeordnete Schalthaken 38 (vgl. Fig. 19, 21) greift am Verbindungselement 37 und damit am Schaltbügel 35 zur Betätigung des Kontaktelementes 34 an und greift in den V-förmigen Abschnitt der Aussparung 46 ein. Innerhalb der Aussparung 46 greift der Schalthaken 38 am Verbindungselement 37 an. Das Verbindungselement 37 wird durch Verschieben des Schalthakens 38, d.h. durch Drücken des Betätigungstasters 42, in der Aussparung 46 verschoben. In den Fig. 18 und 19 ist das Verbindungselement 37 in einer nicht betätigten Stellung und in den Fig. 20 und 21 in einer betätigten Stellung dargestellt.

Die Betätigung der jeweiligen Betätigungstaster 42, 43, 44, 45 ist nun gesperrt, wenn die Schwenklage des Betätigungsgriffes 16 mehr als einen Toleranzwinkel von den vorgesehenen Schwenklagen abweicht. Der Toleranzwinkel ist dabei vzw. durch den Öffnungswinkel des V-förmigen Abschnitts der Aussparung 46 bestimmt. Wenn die tatsächliche Schwenklage des Betätigungsgriffes 16 mehr als den Tolleranzwinkel von der vorgesehenen Schwenklage abweicht, stoßen die Schalthaken 38, 39, 40, 41 gegen die Mantelfläche der Griffschwenkachse 29. Durch Schwenken des Betätigungsgriffs 16 in eine der vorgesehenen, "betätigbaren Schwenklagen" wird hierdurch jeweils mindestens einer der Schalthaken 38, 39, 40, 41 betätigbar und kann entsprechend mit dem Schaltelement, vzw. dem Schaltbügel 35 zusammenwirken, wobei die anderen Schalthaken durch die Außenumfangsfläche der Griffschwenkachse 29 blockiert sind. In jeder ersten, zweiten und dritten Schwenklage (Betätigungsgriff nach links, Betätigungsgriff nach rechts und Betätigungsgriff mittig) ist daher innerhalb eines Toleranzwinkels mindestens ein Schalthaken 38, 39, 40, 41 betätigbar, insbesondere über den entsprechenden zugehörigen Betätigungstaster 42, 43, 44, 45, während die anderen Schalthaken bzw. deren zugehörigen Betätigungstaster eben genau dann - wie oben beschrieben - blockiert sind. Vzw. sind in der mittigen Stellung des Betätigungsgriffes 16, wie bereits erläutert, vzw. aber zwei Schalthaken betätigbar.

Im folgenden wird wieder auf die Fig. 6, 7a, 7b, 8 und 9 Bezug genommen.

Die Griffschwenkachse 29 weist einen sich im wesentlichen in Umfangsrichtung erstreckenden Schlitz 47 auf (vgl. Fig. 6). Bei einem Schaltvorgang rückt der entsprechende Schalthaken 38, 39, 40, 41 zumindest teilweise in den Schlitz 47 ein. Die Schalthaken 38, 39, 40, 41 weisen nun jeweils einen vzw. nach oben oder nach unten aufragenden Blockiervorsprung 48 (vgl. auch Fig. 6) auf, wobei der Blockiervorsprung 48 zwar in den V-förmigen Abschnitt der Aussparung 46 aber nicht in den Schlitz 47 einrücken kann, da er ansonsten gegen die Außenumfangsfläche der Griffschwenkachse 29 anschlagen würde. Hierdurch ist sichergestellt, dass die jeweiligen Betätigungsschalter 17, 18, 19, 20 jeweils nur innerhalb eines Toleranzwinkels um die jeweils zugehörige, vorgesehene, definierte Schwenklage des Betätigungsgriffes 16, insbesondere nur bei den vorgesehenen Schwenklagen links, rechts und mittig des Betätigungsgriffes 16 jeweils entsprechend betätigbar sind.

Der Verbindungsbereich 15 weist ferner einen Haltemechanismus 49 (vgl. Fig. 6 und 9) auf, wobei der Haltemechanismus 49 die Schwenklage des Betätigungsgriffs 16 lösbar fixieren kann. Der Betätigungsgriff 16 weist eine Ringsegmentsstruktur 50 auf, die auch das Lagerauge 28a vzw. zumindest teilweise radial umgrenzt. Die Ringsegmentsstruktur 50 wirkt mit dem Haltemechanismus 49 zusammen. Der Haltemechanismus 49 ist an der Ringsegmentsstruktur 50 zum Fixieren der Schwenklage des Betätigungsgriffs 16 lösbar fixierbar. Der Haltemechanismus 49 ist klemmend mit der Ringsegmentsstruktur 50 verbindbar. Der Haltemechanismus 49 weist ein vzw. U-förmiges Klemmstück 51 auf. Das Klemmstück 51 kann dabei zwei Klemmschenkel 52 aufweisen, wobei der Haltemechanismus 49 ferner eine die beiden Klemmschenkel 52 verbindende Klemmschraube 53 aufweist. Die Ringsegmentsstruktur 50 ist hier zumindest teilweise zwischen den Klemmschenkeln 52 angeordnet. Durch Drehen der Klemmschraube 53 kann die Ringsegmentsstruktur 50 zwischen den beiden Klemmschenkeln 52 eingeklemmt werden.

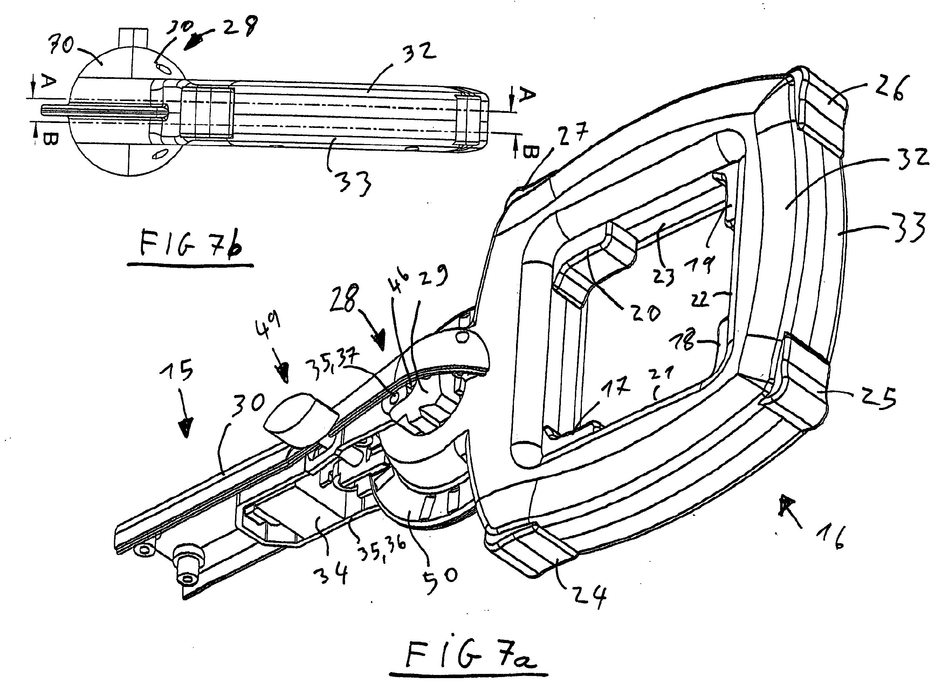

In den Fig. 7a und Fig. 6 sind mehrere Vertiefungen an der Ringsegmentsstruktur 50 dargestellt, die hier nicht näher bezeichnet sind. Der eine der Klemmschenkel 52 greift dabei bei Erreichen dieser Rastposition in die Ringsegmentsstruktur 50 ein, so dass der Benutzer eine Rückmeldung darüber erhält, dass er eine vorgegebene Schwenklage des Betätigungsgriffs 16 erreicht hat. Daneben angeordnete Vertiefungen an der Ringsegmentsstruktur 50 zeigen den Toleranzwinkel bzw. Öffnungswinkel des V-förmigen Abschnitts der Aussparung 46 an, innerhalb der die jeweils aktiven Betätigungsschalter 17, 18, 19, 20 betätigbar ist.

Die Sicherungstaster 24, 25, 26, 27 sind jeweils durch Federspangen 54 (vgl. Fig. 10 und 11) vorgespannt. Durch die Federspangen 54 sind die Sicherungstaster 24, 25, 26, 27 gegen die entsprechenden Betätigungsschalter 17, 18, 19, 20 vorgespannt, so dass die Betätigungsschalter 17, 18, 19, 20 in ihre Stellung "nicht betätigt" gedrängt werden (vgl. Fig. 10) bzw. in dieser Stellung solange "blockiert" sind, bis diese Stellung durch eine Betätigung des jeweiligen Sicherungstasters freigegeben wird.

Die Funktionsweise des Betätigungsgriffs 16 lässt sich - bspw. für die Schwenklage "rechts" - wie folgt zusammenfassen:

In der in Fig. 2 dargestellten Schwenklage "rechts" - bzw. 90° relativ zum Kreissägenblatt nach rechts - wird der Sicherungstaster 24 mit dem Daumen betätigt, wodurch der Betätigungsschalter 17 freigegeben wird. Als nächstes kann der dem Betätigungsschalter 17 zugeordnete Betätigungstaster 42 gedrückt werden. Der dem Betätigungsschalter 17 zugeordnete Schalthaken 38 (vgl. Fig. 19) drückt dann auf den Schaltbügel 35, insbesondere auf das Verbindungselement 37, das in der Aussparung 46, insbesondere dem langlochförmigen Abschnitt der Aussparung 46 geführt ist. Dadurch wird der Bügel 36 gegen das elektrische Kontaktelement 34 und entgegen einer hier angelegten Federkraft gedrückt, was den elektrischen Schaltvorgang auslöst. Über die im Kontaktelement 34 angelegte Federkraft wird der Bewegungsablauf umgedreht, wenn der Betätigungstaster 42 losgelassen wird. Die restlichen Betätigungstaster 43, 44, 45 können hier in dieser Schwenkstellung "rechts", auch wenn die Sicherungstaster 25, 26, 27 gedrückt sind, nicht betätigt werden.

Die vorgesehenen Schwenklagen "links, rechts, mittig" entsprechen hierbei vzw. den Schwenkwinkeln -90°, +90° und 0° relativ zur Ebene des Kreissägeblatts. Der Toleranzwinkel beträgt vzw. im wesentlichen 20°. D.h. der Betätigungsgriff 16 kann in innerhalb von Schwenkwinkel +90° bis +70°, +20° bis -20°, -70° bis - 90° betätigt werden. Die Funktion wird von dem Blockiervorsprung 48, der hier als Steg am jeweiligen Schalthaken 38, 39, 40, 41 ausgebildet ist abgefragt (vgl. Fig. 9). Ist die Winkelabweichung größer als der Toleranzwinkel, geben die jeweiligen Blockiervorsprünge 48 den jeweiligen Schaltvorgang nicht frei. In der in Fig. 19 dargestellten Schwenklage ist nur der Betätigungsschalter 17 betätigbar. In der in Fig. 3 dargestellten Schwenklage sind beide Betätigungsschalter 18 und 19 betätigbar und in der in Fig. 1 dargestellten Schwenklage ist nur der Betätigungsschalter 20 betätigbar.

Die obigen Ausführungen zeigen, dass der Betätigungsgriff 16 daher für viele Arten von Elektrowerkzeugen 1 geeignet ist und insbesondere an einem entsprechenden Elektrowerkzeug 1, wo dies sinnvoll ist, angeordnet und eingesetzt werden kann.

### Bezugszeichenliste:

- 1: Elektrowerkzeug
- 2: Säge
- 3: Kapp- und Gehrungssäge
- 4: Werkstückauflagetisch
- 5: Arm
- 6: Sägevorrichtung
- 7: Drehteller
- 8: Ausleger
- 9: Sägeschlitz
- 10: Sägeblattabdeckung
- 11: Gleitführungsvorrichtung
- 12: Schwenkgelenkverbindung
- 13: Führungsstange
- 14: Schwenkachse
- 15: Verbindungsbereich
- 15a: Ausleger
- 16: Betätigungsgriff
- 17: Betätigungsschalter
- 18: Betätigungsschalter
- 19: Betätigungsschalter
- 20: Betätigungsschalter
- 21: Innenseite
- 22: Innenseite
- 23: Innenseite
- 24: Sicherheitstaster
- 25: Sicherheitstaster
- 26: Sicherheitstaster
- 27: Sicherheitstaster
- 28: Gelenkverbindung
- 28a: Lagerauge
- 29: Griffschwenkachse
- 30: Schalenteil
- 31: Aufnahme
- 32: Griffschalenteil
- 33: Griffschalenteil
- 34: Kontaktelement
- 35: Schaltbügel
- 36: Bügel
- 37: Verbindungselement
- 38: Schalthaken
- 39: Schalthaken
- 40: Schalthaken
- 41: Schalthaken
- 42: Betätigungstaster
- 43: Betätigungstaster
- 44: Betätigungstaster
- 45: Betätigungstaster
- 46: Aussparung
- 47: Schlitz
- 48: Blockiervorsprung
- 49: Haltemechanismus
- 50: Ringsegmentsstruktur
- 51: Klemmstück
- 52: Klemmschenkel
- 53: Klemmschraube
- 54: Federspange
- 55: Fenster
- 56: Fenster

- D: Doppelpfeil

## Patentansprüche

1. Elektrowerkzeug (1), insbesondere Säge (2), mit einem Verbindungsbereich (15) und mit einem Betätigungsgriff (16), wobei der Betätigungsgriff (16) an dem Verbindungsbereich (15) schwenkbar angeordnet ist, wobei der Betätigungsgriff (16) in mehrere Schwenklagen schwenkbar ist und der Betätigungsgriff (16) mindestens einen Betätigungsschalter (17, 18, 19, 20) zur elektrischen Betätigung des Elektrowerkzeugs (1) aufweist, wobei der Verbindungsbereich (15) und der Betätigungsgriff (16) mittels einer Gelenkverbindung (28) miteinander verbunden sind und die Gelenkverbindung (28) ein Lagerauge (28a) und eine mit dem Lagerauge (28a) in Eingriff stehende Griffschwenkachse (29) aufweist, **dadurch gekennzeichnet, dass** mehrere Betätigungsschalter (17, 18, 19, 20) vorgesehen sind, dass der Verbindungsbereich (15) ein elektrisches Kontaktelement (34) aufweist, wobei das elektrische Kontaktelement (34) in jeder Schwenklage des Betätigungsgriffes (16) funktional wirksam mechanisch durch mindestens einen der Betätigungsschalter (17, 18, 19, 20) betätigbar ist, dass der Verbindungsbereich (15) einen mittels der Betätigungsschalter (17, 18, 19, 20) verschiebbares Schaltelement, insbesondere einen Schaltbügel (35) aufweist, und dass das Kontaktelement (34) durch Verschieben des Schaltelementes, insbesondere des Schaltbügels (35) betätigbar ist, wobei die Griffschwenkachse (29) eine Aussparung (46) aufweist, wobei in die Aussparung (46) zumindest ein Teil des Schaltelementes, insbesondere ein Teil des Schaltbügels (35), vzw. ein Verbindungselement (37) eingreift, wobei die Betätigungsschalter (17, 18, 19, 20) jeweils einen Betätigungstaster (42, 43, 44, 45) aufweisen, und wobei eine Betätigung des jeweiligen Betätigungstasters (42, 43, 44, 45) blockiert ist, wenn die tatsächliche Schwenklage des Betätigungsgriffes (16) mehr als einen bestimmten Toleranzwinkel von der jeweiligen zugeordneten betätigbaren Schwenklage abweicht.

2. Elektrowerkzeug nach Anspruch 1, **dadurch gekennzeichnet, dass** die Griffschwenkachse (29) sich quer, insbesondere im wesentlichen senkrecht zum Betätigungsgriff (16) erstreckt.

3. Elektrowerkzeug nach einem der vorstehenden Ansprüche, **dadurch gekennzeichnet, dass** der Betätigungsgriff (16) in mindestens drei betätigbare Schwenklagen schwenkbar ist, in eine erste Schwenklage, in der der Betätigungsgriff (16) relativ zum Verbindungsbereich (15) nach rechts gerichtet ist, in eine zweite Schwenklage, in der der Betätigungsgriff (16) mittig zum Verbindungsbereich (15) orientiert ist, und in eine dritte Schwenklage, in der der Betätigungsgriff (16) relativ zum Verbindungsbereich (15) nach links gerichtet ist und für jede Schwenklage mindestens einer der Betätigungsschalter (17, 18, 19, 20) vorgesehen ist.

4. Elektrowerkzeug nach einem der vorstehenden Ansprüche, **dadurch gekennzeichnet, dass** die Betätigungsschalter (17, 18, 19, 20) mit jeweils einem Schalthaken (38, 39, 40, 41) verbunden sind und/oder jeweils einen Schalthaken (38, 39, 40, 41) aufweisen, wobei die Schalthaken (38, 39, 40, 41) jeweils im Betätigungsgriff (16) so verschiebbar angeordnet und/oder bewegbar ausgebildet sind, so dass bei Betätigen der Betätigungstaster (42, 43, 44, 45) die Schalthaken (38, 39, 40, 41) mit dem Schaltelement, insbesondere dem Schaltbügel (35) zusammenwirken.

5. Elektrowerkzeug nach einem der vorstehenden Ansprüche, **dadurch gekennzeichnet, dass** der Toleranzwinkel durch einen Öffnungswinkel zumindest eines Abschnitts der Aussparung (46) bestimmt ist, wobei der Schaltbügel (35) nur betätigbar ist, wenn der oder die Schalthaken (38, 39, 40, 41) auch in den Abschnitt der Aussparung (46) bewegbar sind.

6. Elektrowerkzeug nach einem der vorstehenden Ansprüche, **dadurch gekennzeichnet, dass** der Schaltbügel (35) einen Bügel (36) mit zwei Schenkeln und ein Verbindungselement (37), vzw. ein stiftförmiges Verbindungselement, aufweist, wobei die Schenkel durch das Verbindungselement (37) miteinander verbunden sind und das Verbindungselement (37) vzw. in die Aussparung (46) der Griffschwenkachse (29) eingreift.

7. Elektrowerkzeug nach einem der vorstehenden Ansprüche, **dadurch gekennzeichnet, dass** die Schalthaken (38, 39, 40, 41) mit den Verbindungselement (37) zusammenwirken.

8. Elektrowerkzeug nach einem der vorstehenden Ansprüche, **dadurch gekennzeichnet, dass** die Betätigungsschalter (17, 18, 19, 20), insbesondere die Schalthaken (38, 39, 40, 41) einen Blockiervorsprung (48) aufweisen, wobei der Blockiervorsprung (48) in die Aussparung (46) bewegbar ist, falls der Betätigungsgriff (16) in einer betätigbaren Schwenklage des Betätigungsgriffs angeordnet ist, und wobei der Blockiervorsprung (48) nicht in die Aussparung (46) bewegbar ist, sondern an einer Außenumfangsfläche der Griffschwenkachse (29) anschlägt, falls der Betätigungsgriff (16) in einer mehr als den Toleranzwinkel von der betätigbaren Schwenklage abweichenden Schwenklage angeordnet ist.

9. Elektrowerkzeug nach einem der vorstehenden Ansprüche, **dadurch gekennzeichnet, dass** der Betätigungsgriff (16) im wesentlichen eine Rechteckrahmenform aufweist, wobei vzw. an drei Innenseiten (21, 22, 23) die Betätigungstaster (42, 43, 44, 45) und vzw. an den zugehörigen Außenseiten jeweils Sicherheitstaster (24, 25, 26 ,27), angeordnet sind.

10. Elektrowerkzeug nach einem der vorstehenden Ansprüche, **dadurch gekennzeichnet, dass** der Verbindungsbereich (15) einen Haltemechanismus (49) aufweist, wobei die Schwenklage des Betätigungsgriffs (16) mit dem Haltemechanismus (49) lösbar fixierbar ist.

11. Elektrowerkzeug nach einem der vorstehenden Ansprüche, **dadurch gekennzeichnet, dass** der Betätigungsgriff (16) eine Ringsegmentsstruktur (50) aufweist, wobei der Haltemechanismus (49) einen U-förmiges Klemmstück (51) aufweist, wobei der Haltemechanismus (49) klemmend mit der Ringsegmentsstruktur (50) verbindbar ist.

12. Elektrowerkzeug nach einem der vorstehenden Ansprüche, **dadurch gekennzeichnet, dass** das Klemmstück (51) zwei Klemmschenkel (52) und eine die beiden Klemmschenkel (52) verbindende Klemmschraube (53) aufweist, wobei die Ringsegmentsstruktur (50) sich zumindest teilweise zwischen den Klemmschenkeln (52) erstreckt.

## Claims

1. Power tool (1), in particular saw (2), having a connecting region (15) and having an actuating handle (16), wherein the actuating handle (16) is arranged in a pivotable manner in the connecting region (15), wherein the actuating handle (16) is pivotable into several pivoted positions and the actuating handle (16) has at least one actuating switch (17, 18, 19, 20) for electrically actuating the power tool (1), wherein the connecting region (15) and the actuating handle (16) are connected together via a hinged connection (28) and the hinged connection (28) has a bearing eye (28a) and a handle pivot pin (29) engaged with the bearing eye (28a), **characterized in that** several actuating switches (17, 18, 19, 20) are provided, **in that** the connecting region (15) has an electrical contact element (34), wherein the electrical contact element (34) is mechanically actuable in a functionally active manner by at least one of the actuating switches (17, 18, 19, 20) in every pivoted position of the actuating handle (16), **in that** the connecting region (15) has a switching element, in particular a switching bracket (35), that is displaceable by means of the actuating switches (17, 18, 19, 20), and **in that** the contact element (34) is actuable by displacement of the switching element, in particular of the switching bracket (35), wherein the handle pivot pin (29) has a cutout (46), wherein at least a part of the switching element, in particular a part of the switching bracket (35), preferably a connecting element (37), engages in the cutout (46), wherein the actuating switches (17, 18, 19, 20) each have an actuating button (42, 43, 44, 45), and wherein actuation of each particular actuating button (42, 43, 44, 45) is blocked when the actual pivoted position of the actuating handle (16) deviates from the respectively assigned actuable pivoted position by more than a particular tolerance angle.

2. Power tool according to Claim 1, **characterized in that** the handle pivot pin (29) extends transversely, in particular substantially perpendicularly, to the actuating handle (16).

3. Power tool according to either of the preceding claims, **characterized in that** the actuating handle (16) is pivotable into at least three actuable pivoted positions, into a first pivoted position, in which the actuating handle (16) is directed towards the right relative to the connecting region (15), into a second pivoted position, in which the actuating handle (16) is oriented centrally with respect to the connecting region (15), and into a third pivoted position, in which the actuating handle (16) is directed towards the left relative to the connecting region (15), and at least one of the actuating switches (17, 18, 19, 20) is provided for each pivoted position.

4. Power tool according to one of the preceding claims, **characterized in that** the actuating switches (17, 18, 19, 20) are each connected to a switching hook (38, 39, 40, 41) and/or each have a switching hook (38, 39, 40, 41), wherein the switching hooks (38, 39, 40, 41) are each arranged in a displaceable manner in the actuating handle (16) and/or are configured in a movable manner such that when the actuating buttons (42, 43, 44, 45) are actuated, the switching hooks (38, 39, 40, 41) cooperate with the switching element, in particular the switching bracket (35).

5. Power tool according to one of the preceding claims, **characterized in that** the tolerance angle is determined by an opening angle of at least one portion of the cutout (46), wherein the switching bracket (35) is actuable only when the switching hook(s) (38, 39, 40, 41) is/are also movable in the portion of the cutout (46).

6. Power tool according to one of the preceding claims, **characterized in that** the switching bracket (35) has a bracket (36) with two legs, and a connecting element (37), preferably a pin-like connecting element, wherein the legs are connected together by the connecting element (37) and the connecting element (37) engages preferably in the cutout (46) in the handle pivot pin (29).

7. Power tool according to one of the preceding claims, **characterized in that** the switching hooks (38, 39, 40, 41) cooperate with the connecting element (37).

8. Power tool according to one of the preceding claims, **characterized in that** the actuating switches (17, 18, 19, 20), in particular the switching hooks (38, 39, 40, 41), have a blocking protrusion (48), wherein the blocking protrusion (48) is movable into the cutout (46) if the actuating handle (16) is arranged in an actuable pivoted position of the actuating handle, and wherein the blocking protrusion (48) is not movable into the cutout (46), but strikes an outer circumferential surface of the handle pivot pin (29), if the actuating handle (16) is arranged in a pivoted position that deviates from the actuable pivoted position by more than the tolerance angle.

9. Power tool according to one of the preceding claims, **characterized in that** the actuating handle (16) substantially has a rectangular frame shape, wherein the actuating buttons (42, 43, 44, 45) are preferably arranged on three inner sides (21, 22, 23) and respective safety buttons (24, 25, 26, 27) are preferably arranged on the associated outer sides.

10. Power tool according to one of the preceding claims, **characterized in that** the connecting region (15) has a retaining mechanism (49), wherein the pivoted position of the actuating handle (16) is releasably fixable by way of the retaining mechanism (49).

11. Power tool according to one of the preceding claims, **characterized in that** the actuating handle (16) has a ring segment structure (50), wherein the retaining mechanism (49) has a U-shaped clamp (51), wherein the retaining mechanism (49) is connectable to the ring segment structure (50) in a clamped manner.

12. Power tool according to one of the preceding claims, **characterized in that** the clamp (51) has two clamping legs (52) and a clamping screw (53) connecting the two clamping legs (52), wherein the ring segment structure (50) extends at least partially between the clamping legs (52).

## Revendications

1. Outil électrique (1), notamment scie (2), comprenant une zone de liaison (15) et comprenant une poignée d'actionnement (16), la poignée d'actionnement (16) étant montée pivotante sur la zone de liaison (15), la poignée d'actionnement (16) pouvant être pivotée dans plusieurs positions de pivotement et la poignée d'actionnement (16) possédant au moins un commutateur d'actionnement (17, 18, 19, 20) destiné à l'actionnement électrique de l'outil électrique (1), la zone de liaison (15) et la poignée d'actionnement (16) étant reliées entre elles au moyen d'une liaison articulée (28) et la liaison articulée (28) possédant un oeillet de palier (28a) et un axe de pivotement de poignée (29) qui est en prise avec l'oeillet de palier (28a), caractérisé en ce plusieurs commutateurs d'actionnement (17, 18, 19, 20) sont présents, en ce que la zone de liaison (15) possède un élément de contact électrique (34), l'élément de contact électrique (34), dans chaque position de pivotement de la poignée d'actionnement (16), pouvant être actionné mécaniquement avec effet fonctionnel par au moins l'un des commutateurs d'actionnement (17, 18, 19, 20), en ce que la zone de liaison (15) possède un élément de commutation, notamment un étrier de commutation (35), qui peut coulisser au moyen des commutateurs d'actionnement (17, 18, 19, 20), et en ce que l'élément de contact (34) peut être actionné par coulissement de l'élément de commutation, notamment de l'étrier de commutation (35), l'axe de pivotement de poignée (29) possédant une cavité (46), au moins une partie de l'élément de commutation, notamment une partie de l'étrier de commutation (35), de préférence un élément de liaison (37), venant en prise dans la cavité (46), les commutateurs d'actionnement (17, 18, 19, 20) possédant respectivement une touche d'actionnement (42, 43, 44, 45) et un actionnement de la touche d'actionnement (42, 43, 44, 45) correspondante étant bloqué lorsque la position de pivotement effective de la poignée d'actionnement (16) s'écarte de plus d'un angle de tolérance défini de la position de pivotement actionnable respectivement associée.

2. Outil électrique selon la revendication 1, **caractérisé en ce que** l'axe de pivotement de poignée (29) s'étend transversalement, notamment sensiblement perpendiculairement par rapport à la poignée d'actionnement (16).

3. Outil électrique selon l'une des revendications précédentes, **caractérisé en ce que** la poignée d'actionnement (16) peut pivoter dans au moins trois positions de pivotement actionnables, dans une première position de pivotement dans laquelle la poignée d'actionnement (16) est orientée vers la droite par rapport à la zone de liaison (15), dans une deuxième position de pivotement dans laquelle la poignée d'actionnement (16) est orientée au centre par rapport à la zone de liaison (15) et une troisième position de pivotement dans laquelle la poignée d'actionnement (16) est orientée vers la gauche par rapport à la zone de liaison (15), et au moins l'un des commutateurs d'actionnement (17, 18, 19, 20) est prévu pour chaque position de pivotement.

4. Outil électrique selon l'une des revendications précédentes, **caractérisé en ce que** les commutateurs d'actionnement (17, 18, 19, 20) sont respectivement reliés à un crochet de commutation (38, 39, 40, 41) et/ou possèdent respectivement un crochet de commutation (38, 39, 40, 41), les crochets de commutation (38, 39, 40, 41) étant montés coulissants dans la poignée d'actionnement (16) et/ou configurés mobiles de telle sorte que lors de l'actionnement des touches d'actionnement (42, 43, 44, 45), les crochets de commutation (38, 39, 40, 41) coopèrent avec l'élément de commutation, notamment l'étrier de commutation (35).

5. Outil électrique selon l'une des revendications précédentes, **caractérisé en ce que** l'angle de tolérance est défini par un angle d'ouverture d'au moins une portion de la cavité (46), l'étrier de commutation (35) ne pouvant être actionné que lorsque le ou les crochets de commutation (38, 39, 40, 41) peuvent également être déplacés dans la portion de la cavité (46).

6. Outil électrique selon l'une des revendications précédentes, **caractérisé en ce que** l'étrier de commutation (35) possède un étrier (36) pourvu de deux branches et d'un élément de liaison (37), de préférence un élément de liaison en forme de broche, les branches étant reliées entre elles par l'élément de liaison (37) et l'élément de liaison (37) venant de préférence en prise dans la cavité (46) de l'axe de pivotement de poignée (29).

7. Outil électrique selon l'une des revendications précédentes, **caractérisé en ce que** les crochets de commutation (38, 39, 40, 41) coopèrent avec l'élément de liaison (37).

8. Outil électrique selon l'une des revendications précédentes, **caractérisé en ce que** les commutateurs d'actionnement (17, 18, 19, 20), notamment les crochets de commutation (38, 39, 40, 41), possèdent un élément saillant de blocage (48), l'élément saillant de blocage (48) pouvant être déplacé dans la cavité (46) dans le cas où la poignée d'actionnement (16) est disposée dans une position de pivotement actionnable de la poignée d'actionnement, et l'élément saillant de blocage (48) ne pouvant pas être déplacé dans la cavité (46), mais venant en butée contre une surface périphérique extérieure de l'axe de pivotement de poignée (29) dans le cas où la poignée d'actionnement (16) est disposée dans une position de pivotement qui s'écarte de plus de l'angle de tolérance de la position de pivotement actionnable.

9. Outil électrique selon l'une des revendications précédentes, **caractérisé en ce que** la poignée d'actionnement (16) possède sensiblement une forme de cadre rectangulaire, les touches d'actionnement (42, 43, 44, 45) étant disposées de préférence sur trois côtés intérieurs (21, 22, 23) et des touches de sécurité (24, 25, 26, 27) respectives étant disposées de préférence sur les côtés extérieurs associés.

10. Outil électrique selon l'une des revendications précédentes, **caractérisé en ce que** la zone de liaison (15) possède un mécanisme de maintien (49), la position de pivotement de la poignée d'actionnement (16) pouvant être bloquée de manière amovible avec le mécanisme de maintien (49).

11. Outil électrique selon l'une des revendications précédentes, **caractérisé en ce que** la poignée d'actionnement (16) possède une structure de segment annulaire (50), le mécanisme de maintien (49) possédant une pièce de serrage en forme de U (51), le mécanisme de maintien (49) pouvant être relié avec serrage à la structure de segment annulaire (50).

12. Outil électrique selon l'une des revendications précédentes, **caractérisé en ce que** la pièce de serrage (51) possède deux branches de serrage (52) et une vis de serrage (53) qui relie les deux branches de serrage (52), la structure de segment annulaire (50) s'étendant au moins partiellement entre les branches de serrage (52).
